# EUROPÄISCHE PATENTSCHRIFT

(11) **EP 1 423 903 B1**
(45) Veröffentlichungstag und Bekanntmachung des Hinweises auf die Patenterteilung: **03.03.2010**
(21) Anmeldenummer: 02738055.9
(22) Anmeldetag: 10.05.2002
(51) Int. Cl.: H02K 9/16

(54) **ELEKTROMOTOR MIT KÜHLUNG**
ELECTRIC MOTOR COMPRISING A COOLING SYSTEM
MOTEUR ELECTRIQUE EQUIPE D'UN SYSTEME DE REFROIDISSEMENT

(30) Priorität: 29.08.2001 CH 159401
(43) Veröffentlichungstag der Anmeldung: 02.06.2004
(73) Patentinhaber: ETEL S. A.., 2112 Môtiers (CH)
(72) Erfinder: WAVRE, Nicolas, 2116 Areuse (CH); BESSON, Christophe, CH-1400 Yverdon-les-Bains (CH); DOMINÉ , Emmanuel, CH-2014 Bôle (CH); KRAUCHI, Frank, CH-1400 Yverdon (CH); NAPOLI,Michel, CH-2114 Fleurier (CH); PELLEGRINI, Stéphane, F-25160 Montperrex (FR)
(74) Vertreter: Pleyer, Hans Anno
(86) Internationale Anmeldenummer: PCT/EP2002/005161
(87) Internationale Veröffentlichungsnummer: WO 2003/019754

(56) Entgegenhaltungen:
- US-A- 5 578 879
- US-A- 5 642 013
- US-A- 5 723 917
- US-A- 5 864 187

## Beschreibung

Die Erfindung betrifft einen Elektromotor mit Kühlung nach dem Oberbegriff des Anspruches 1. Die Erfindung läßt sich für rotatorische Motoren und besonders vorteilhaft für Linearmotoren einsetzen.

Ein Linearmotor bietet für viele Anwendungen, in denen letztlich lineare Bewegungen ausgeführt werden müssen, als Direktantrieb entscheidende Vorteile gegenüber einem herkömmlichen rotatorischen Antrieb. Da keine mechanischen Elemente wie beispielsweise Kugelspindeln oder Zahnriemen zur Umsetzung einer Drehbewegung in eine Linearbewegung benötigt werden, ist die mögliche Verfahrgeschwindigkeit und die Positioniergenauigkeit eines solchen Direktantriebes nicht unnötig beschränkt. Geschwindigkeit und Kraft können dabei über einen weiten Bereich geregelt werden, Probleme mit Umkehrspiel treten bei der Positionierung nicht auf. Auch bei sehr schnellen und häufigen Richtungswechseln tritt bei linearen Direktantrieben vergleichsweise wenig Verschleiß auf, so daß die Lebensdauer im Vergleich zu rotatorischen Antrieben steigt und dabei die Positioniergenauigkeit mit der Betriebszeit nicht abnimmt.

Diese Eigenschaften lassen Linearmotoren z.B. für Pick-and-Place - Applikationen interessant erscheinen. Hier müssen beispielsweise einzelne elektronische Schaltungen (Chips) einer zersägten Siliziumscheibe (Wafer) aufgenommen und in ein Gehäuse eingesetzt werden. Da die Chips sehr klein sind, können etliche zehntausend Chips auf einem Wafer üblicher Größe Platz finden. Ein Greifarm muß also einerseits sehr schnell arbeiten können (mehrere Chips pro Sekunde), und andererseits sehr exakt positioniert werden, um die Chips beim Aufnehmen nicht zu beschädigen und mit der zur Weiterverarbeitung nötigen Genauigkeit positionieren zu können.

In den Spulen des Primärteils eines Elektromotors entsteht Abwärme, die die Betriebstemperatur ansteigen läßt. Da zu hohe Temperaturen zu einer Zerstörung des Motors führen, kann auf eine Kühlung oft nicht verzichtet werden.

In der EP 793870 B1 ist ein Synchronmotor (linear oder rotatorisch) mit Kühlung beschrieben, dessen Primärteil in den Lücken eines Eisenkerns neben den Spulen auch Kühlrohre enthält, die von einem Kühlmedium durchströmt werden, um Wärme aus dem Motor abzuführen. Primärteile dieser Art werden üblicherweise mit einem Kunstharz vergossen, um einen sicheren Halt der Spulen, der Zuleitungen zu den Spulen und der Kühlrohre zu gewährleisten. Der Einsatz von Kühlschlangen bedeutet einen zusätzlichen Aufwand und erhöht damit die Kosten eines Linearmotors beträchtlich.

In der US 4839545 erkennt man beispielweise in Figur 8 einen Eisenkern, dessen Bleche separate Kühlkanäle aufweisen. Diese Kühlkanäle können jedoch durch Kunstharz blockiert werden, wenn sie nahe an den Spulen liegen (um eine gute Kühlung zu gewährleisten). Um die Spulen vollständig zu vergießen, muß zunächst Kunstharz über die eigentlich gewünschte Füllhöhe hinaus eingebracht werden, da sich im weiteren Verarbeitungsprozeß das Kunstharz zusammenzieht. Dabei können Reste des Kunstharzes in den Kühlkanälen verbleiben und diese blockieren.

Es wurde bereits vorgeschlagen, auf den Verguß des Primärteils zu verzichten, um eine einfache Kühlung zu erzielen. So wird in der US 5751077 ein Primärteil eines Linearmotors in einem abgedichteten Gehäuse beschrieben, dessen Spulen in direktem Kontakt mit einem Kühlmedium stehen, da vollständig auf einen Verguß verzichtet wird. Das Gehäuse des Primärteils bildet zusammen mit dem Eisenkern zwei Durchströmungsräume, zwischen denen das Kühlmedium an den Spulen vorbei strömt und so für deren Kühlung sorgt. Durch den Verzicht auf den Verguß und damit auf eine Fixierung der Spulen und insbesondere der elektrischen Zuleitungen zu den Spulen ist aber wegen den in einem solchen Linearmotor auf die elektrischen Leitungen wirkenden Kräfte keine stabile Anordnung gegeben.

Aufgabe der Erfindung ist es daher, einen Elektromotor mit einer Kühlung für das Primärteil anzugeben, die eine effektive Wärmeabfuhr erlaubt, einfach zu realisieren ist und dennoch eine ausreichende Stabilität des Primärteils gewährleistet.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird nunmehr vorgeschlagen, im Primärteil eines Elektromotors den Spulen tragenden Eisenkern mit Zähnen und Lücken in seinem Gehäuse nur teilweise zu vergießen. Dabei bleibt wenigstens ein Bereich der Lücken des Eisenkerns unvergossen. Diese unvergossenen Bereiche der Lücken bilden Kanäle und verbinden Durchströmungsräume beiderseits des Eisenkernes. Ein Kühlmedium kann so von einem ersten Durchströmungsraum durch die unvergossenen Bereiche in einen zweiten Durchströmungsraum strömen, und dabei durch den direkten Kontakt mit dem Eisenkern und der möglichst gut wärmeleitenden Vergußmasse Wärme abführen. Es ist sogar möglich, die Vergußmasse so einzubringen, daß auch ein Teil der Spulen in direkten Kontakt mit dem Kühlmedium kommt, wodurch eine besonders gute Wärmeabfuhr erzielt wird.

Weitere Vorteile sowie Einzelheiten der vorliegenden Erfindung ergeben sich aus der nachfolgenden Beschreibung bevorzugter Ausführungsformen anhand der Figuren. Dabei zeigt
- Figur 1: eine Seitenansicht des Linearmotors
- Figur 2: eine Draufsicht eines Primärteiles
- Figur 3: eine vorteilhafte Ausbildung einer Lücke
- Figur 4: eine Seitenansicht einer weiteren Ausführungsform

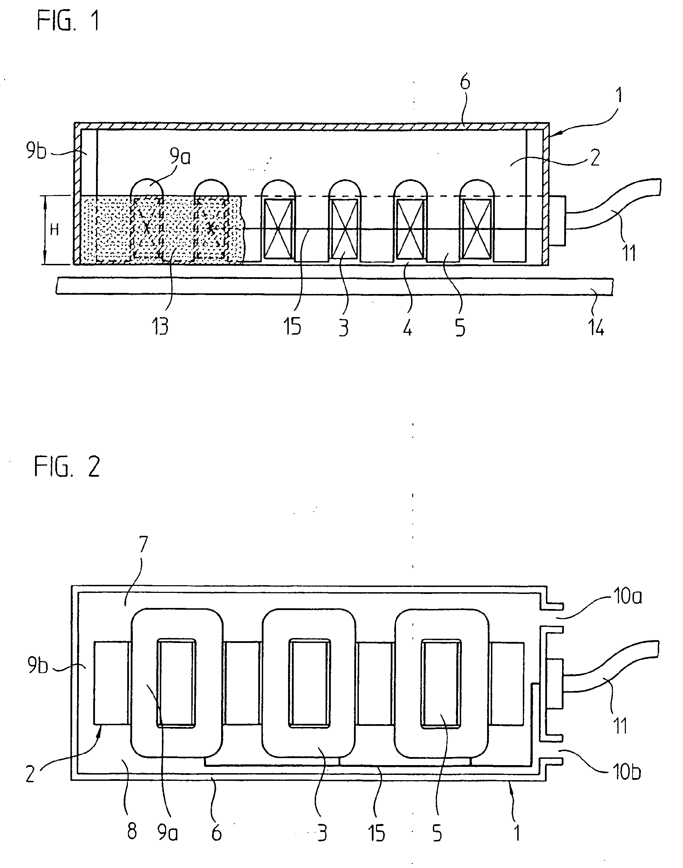

Figur 1 zeigt einen Linearmotor mit Primärteil 1 und Sekundärteil 14. Das Sekundärteil 14 kann beispielsweise aus einem Träger mit aufgereihten Permanentmagneten bestehen. Das Primärteil 1 besteht aus einem Gehäuse 6 mit einem Eisenkern 2, der auf der dem Sekundärteil 14 zugewandten Seite Zähne 5 und Lücken 4 aufweist. Der Eisenkern 2 besteht üblicherweise aus gestanzten und geschichteten Blechteilen, um Wirbelstromverluste im Eisenkern 2 zu vermeiden. In den Lücken 4 befinden sich Spulen 3, die bei geeigneter Bestromung für die zum Vorschub des Linearmotors nötigen Magnetfelder erzeugen. Über einen elektrischen Anschluß 11 am Gehäuse 6 werden die Spulen 4 des Primärteils 1 mit Strom versorgt. Innerhalb des Gehäuses 6 sind daher elektrische Zuleitungen 15 zwischen dem elektrischen Anschluß 11 und den einzelnen Spulen 3 verlegt. Die Spulen 3 sind in der beschriebenen bevorzugten Ausführungsform vorgefertigte Spulen, die über die Zähne 5 geschoben werden und dabei die Lücken 4 teilweise ausfüllen. Wie in der Eingangs erwähnten Schrift EP 0793870 B1 dargelegt, ist es vorteilhaft, wenn jede Spule 3 jeweils nur einen Zahn 5 umwickelt. Insbesondere wird die Umwicklung nur jedes zweiten Zahnes 5, wie in Figur 2 dargestellt, bevorzugt. Die im folgenden beschriebe Kühlung für einen Linearmotor läßt sich aber auch für andere Wicklungsarten einsetzen, wenn eine Spule 3 mehrere Zähne 5 umwickelt, und die Spulen 3 sich zum Teil überlappen.

Durch die Ohmschen Verluste in den Spulen 3 entsteht Abwärme, die das Primärteil 1 erwärmt. Steigt die Temperatur im Primärteil zu stark an, droht eine Zerstörung des Motors, da dann die Isolation zwischen den einzelnen Wicklungsdrähten der Spulen 3 beschädigt werden kann (typischerweise ab etwa 130 °C). Die Erwärmung des Motors begrenzt also den maximalen Strom und damit die maximale Motorkraft und Beschleunigung.

Neben der Abfuhr der Wärme besteht ein weiteres Problem in der geeigneten Fixierung der Spulen 3 und deren elektrischen Zuleitungen 15. Da auf stromdurchflossene Leiter in Magnetfeldern Kräfte wirken, sind diese einer erheblichen mechanischen Belastung ausgesetzt. Erlaubt die Konstruktion des Primärteils 1 eine Bewegung der Spulen 3 oder ihrer elektrischen Zuleitungen 15, können Schäden (Kabelbruch, Kurzschluß) durch Abnutzung entstehen. Es leidet außerdem die Qualität der Motorsteuerung, da die dem Motor vorgegebenen Ströme nicht nur in einen (gewünschten) Vorschub umgesetzt werden, sondern auch (ungewünschte) Bewegungen innerhalb des Primärteils auftreten. Diese Probleme bestehen insbesondere für die elektrischen Zuleitungen 15 zu den Spulen 3.

Um die beschriebenen Probleme zu lösen, wird nun vorgeschlagen, das Primärteil 1 teilweise mit einer Vergußmasse 13 zu versehen. Üblicherweise kommen hier Kunstharze mit einer guten Wärmeleitfähigkeit bei hoher elektrischer Durchschlagfestigkeit zum Einsatz.

Die Spulen 3 füllen die Lücken 4 zwischen den Zähnen 5 nicht vollständig aus, sondern lassen beispielsweise wie in der anhand der Figuren 1 und 2 beschriebenen bevorzugten Ausführungsform noch einen Teil der Lücke 4 an deren dem Sekundärteil 14 abgewandten Ende frei. Die Vergußmasse 13 wird dabei bis zu einer Höhe H von der dem Sekundärteil 14 zugewandten Seite des Primärteils 1 gefüllt, so daß die Spulen 3 und deren elektrische Zuleitungen 15 vollständig bedeckt und damit fixiert sind. Die Höhe H wird jedoch so gewählt, daß in den Lücken 4 Kanäle 9a dort entstehen, wo das Volumen der Lücke 4 nicht durch eine Spule 3 belegt ist.

Wie in Figur 2 zu erkennen ist, verbinden die Kanäle 9a einen ersten Durchströmungsraum 7 mit einem zweiten Durchströmungsraum 8, die ansonsten durch den Eisenkern 2 voneinander getrennt sind. Je nach Ausführung können auch seitliche Kanäle 9b entstehen, wenn der Eisenkern 2 das Gehäuse 6 nicht in seiner ganzen Länge ausfüllt.

Preßt man nun ein geeignetes Kühlmedium über einen oder mehrere Anschlüsse 10a in den ersten Durchströmungsraum 7, so wird dieses Kühlmedium durch die Kanäle 9a,b in den zweiten Durchströmungsraum 8 fließen und diesen durch einen oder mehrere Anschlüsse 10b wieder verlassen. Dabei findet ein Wärmeaustausch mit allen berührten Flächen statt, also im beschriebenen Beispiel mit dem Eisenkern 2 und der Vergußmasse 13. So wird eine gute Kühlung des Primärteils 1 erzielt, ohne daß im Vergleich mit einem ungekühlten Linearmotor zusätzliche Kühlschlangen notwendig wären. Die Spulen 3 und deren elektrische Zuleitungen 15 sind dabei durch die Vergußmasse 13 fixiert.

Die Anschlüsse 10a,b können am Gehäuse 6 beliebig und damit für die jeweilige Applikation optimiert angeordnet werden. So ist es möglich, die Anschlüsse 10a,b wie gezeichnet seitlich des Gehäuses 6 anzuordnen, aber auch eine Zufuhr oder Abfuhr des Kühlmediums durch einen oder mehrere Anschlüsse 10a,b durch die Oberseite des Gehäuses 6 ist denkbar. Im Inneren des Gehäuses 6 sind jeweils keine Änderungen nötig, da auf eigene Kühlschlangen verzichtet wird.

Da wie erwähnt die Fixierung der Spulen 13 selbst weniger wichtig ist als die Fixierung der elektrischen Zuleitungen 15, kann man auch die Vergußhöhe H reduzieren. Dies hat zur Folge, daß ein Teil der Spulen 3 nicht mehr vergossen ist und somit in direktem Kontakt mit dem Kühlmedium steht: Die freiliegenden Bereiche der Spulen 3 in beiden Durchströmungsräumen 7,8 und die Flächen der Spulen 3, die zusammen mit dem Eisenkern 2 die Kanäle 9a bilden. Wählt man wie beschrieben eine geringere Vergußhöhe H, so daß Teile der Spulen 3 frei liegen, sollte darauf geachtet werden, daß zumindest die elektrischen Zuleitungen 15 der Spulen 3 durch die Vergußmaße fixiert sind. Ein Verguß von wenigstens 20% der Spulen sollte hierfür mindestens vorgesehen werden.

In elektrischen Maschinen ist es üblich, unvergossene Spulen zumindest mit einer dünnen Schicht Kunstharz zu imprägnieren, um Probleme mit Feuchtigkeit zu vermeiden. Diese Maßnahme empfiehlt sich auch für eventuell nicht vergossene Bereiche der Spulen 3.

Ein Vorteil dieser Ausführungsform besteht darin, daß auf eine Abdeckung des Gehäuses 6 zum Sekundärteil 14 verzichtet werden kann. Die Vergußmasse 13 verschließt das Gehäuse 6 dicht.

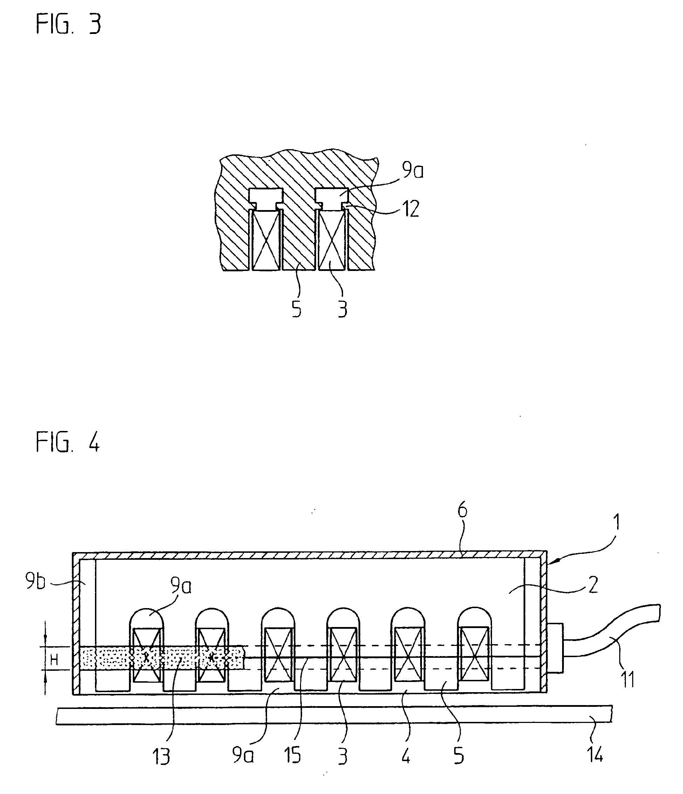

Anhand von Figur 3 sei nun eine besonders vorteilhafte Ausführung der Lücken 4 beschrieben. Um das Positionieren der vorgefertigten Spulen 3 in den Lücken 4 zu erleichtern, befinden sich in der Nähe des geschlossenen Endes der Lücken 3 Vorsprünge 12, die einen Anschlag für die Spulen 3 in ihrer Sollposition bilden. Dadurch ist sichergestellt, daß die Spulen 3 auch den zur Bildung der Kanäle 9a nötigen Bereich der Lücken 4 frei lassen.

Zum geschlossenen Ende der Lücken 4 kann sich die durch den Vorsprung verkleinerte Querschnittsfläche der Lücken 4 wieder vergrößern, um ausreichend dimensionierte Kanäle 9a zu erhalten. Ein weiterer Vorteil der genauen Ausrichtung der Spulen 3 besteht darin, daß nun die Vergußhöhe H genauer eingestellt werden kann, wenn eine vollständige Bedeckung aller Spulen 3 erwünscht ist. Dabei besteht bei den Kanälen 9a nach Figur 1 oder Figur 3 übrigens nicht die eingangs erwähnte Gefahr der Blockade durch zurückbleibende Vergußmaße 13, obwohl die Kanäle 9a sehr nahe an den Spulen 3 liegen: Verkleinert sich das Volumen der Vergußmasse 13 durch den Aushärtungsprozeß, kann sich die Vergußmasse 13 ohne Hindernisse durch die Lücken 4 in Richtung der Spulen 3 zurückziehen.

In einer Abwandlung der beschriebenen Ausführungsform ist es auch möglich, die Vergußmasse 13 so einzubringen, daß die Kanäle 9a auf der dem Sekundärteil 14 zugewandten Seite der Spulen 3 liegen. Dann muß das Gehäuse 6 auf der dem Sekundärteil 14 zugewandten Seite durch eine Abdeckung (etwa ein dünnes Blech oder Kunststoff) verschlossen werden.

Die Spulen 3 müssen in dieser zweiten Variante noch Bereiche der Lücken 4 freilassen, die dem Sekundärteil 14 zugewandt sind und von Vergußmasse 13 frei bleiben. Dadurch entstehen wiederum Kanäle 9a, die den ersten und zweiten Durchströmungsraum 7,8 miteinander verbinden. Auch hier ist es natürlich möglich, einen Teil der Spulen 3 (jetzt dem Sekundärteil 14 zugewandt) nicht mit der Vergußmasse 13 zu bedecken und diesen Teil falls nötig zu imprägnieren.

Etwas aufwendiger herzustellen ist eine in Figur 4 dargestellte dritte Ausführungsform, die aus einer Kombination der beiden ersten besteht: Die Vergußmasse 13 wird so eingebracht, daß lediglich die Spulen 3 ganz oder teilweise bedeckt sind. Auf der dem Sekundärteil 14 zugewandten und auf der dem Sekundärteil 14 abgewandten Seite der Spulen 3 bleiben jeweils Bereiche der Lücken 4 von Vergußmasse 13 frei, so daß beiderseits der Spulen Kanäle 9a den ersten und zweiten Durchströmungsraum 7,8 miteinander verbinden. Werden die Spulen 3 nicht vollständig vergossen, sollten die frei liegenden Bereiche der Spulen 3 wie erwähnt imprägniert werden. Es sollte dann außerdem darauf geachtet werden, daß wenigstens die elektrischen Zuleitungen 15 der Spulen 3 von Vergußmasse 13 gehalten werden, wofür wiederum eine Vergußhöhe H von ca. 20% der Spulenhöhe als unterer Grenzwert für eine sinnvolle Stabilisierung gelten kann.

Während die zuerst beschriebene Ausführungsform mit Kanälen 9a auf der dem Sekundärteil 14 abgewandten Seite der Spulen 3 eine gewisse Wärmeabschirmung des Primärteils 1 nach der dem Sekundärteil 14 abgewandten Seite bewirkt, verhindert die Kühlung in der zweiten Ausführungsform (Kanäle 9a auf der dem Sekundärteil 14 zugewandten Seite der Spulen 3) einen zu großen Wärmeintrag in das Sekundärteil 14. Dadurch kann etwa eine Demagnetisierung der Permanentmagneten des Sekundärteils 14 verhindert werden. Die dritte Ausführungsform verbindet die Kühlmöglichkeiten der beiden ersten Ausführungsformen miteinander.

Als Kühlmedium kommt vorzugsweise Luft zum Einsatz, da diese in vielen Anwendungen bereits zur Verfügung steht. Auf eine gezielte Abführung der Luft nach dem Ausströmen aus Anschluß 10b kann dann in den meisten Anwendungen verzichtet werden. Grundsätzlich läßt sich die Erfindung aber auch mit anderen gasförmigen (z.B. Schutzgas) oder flüssigen (z.B. Wasser, Öl) Kühlmedien anwenden.

Die Erfindung eignet sich besonders für Linearmotoren, da dort die Füllhöhe H einfach durch die Kontrolle des verwendeten Volumens an Vergußmasse eingestellt werden kann. Betrachtet man rotatorische Motoren als gekrümmte Linearmotoren wird klar, daß die Erfindung ohne weitere Änderungen auch auf rotatorische Motoren anwendbar ist. Es ist lediglich mit geeigneten Verfahren dafür Sorge zu tragen, daß die Vergußmasse 13 Kanäle 9a in den Lücken 4 frei läßt. Dies kann beispielsweise durch das schrittweise Vergießen einzelner Abschnitte des Eisenkernes 2 erfolgen, die annähernd linear sind, oder durch nachträgliches Entfernen von Vergußmaße 13 aus einem wie üblich voll vergossenen Motor mit geschlossenen Lücken 4. Letzteres könnte auch eine Option für die Herstellung der Linearmotoren sein, insbesondere für die zuletzt beschrieben dritte Ausführungsform der Erfindung mit Kanälen 9a auf beiden Seiten der Spulen 3.

## Patentansprüche

1. Elektromotor mit Kühlung, bestehend aus einem Primärteil (1) und einem Sekundärteil (14), dessen Primärteil (1) aus einem Eisenkern (2) und Spulen (3) besteht, die in Lücken (4) liegen und Zähne (5) des Eisenkernes (2) umschließen, sowie einem Gehäuse (6), das den Eisenkern (2) aufnimmt, so daß für ein Kühlmedium ein erster Durchströmungsraum (7) und ein zweiter Durchströmungsraum (8) beiderseits des Eisenkernes (2) entsteht, **dadurch gekennzeichnet, daß** die Spulen (3) zumindest teilweise mit Vergußmasse (13) umgeben sind, so daß der erste Durchströmungsraum (7) und der zweite Durchströmungsraum (8) wenigstens durch Kanäle (9a) in den Lücken (4) in Verbindung stehen.

2. Elektromotor nach Anspruch 1, **dadurch gekennzeichnet, daß** die Spulen (3) vollständig von Vergußmasse (13) bedeckt sind.

3. Elektromotor nach Anspruch 1, **dadurch gekennzeichnet, daß** die Spulen (3) nur teilweise von Vergußmasse (13) bedeckt sind.

4. Elektromotor nach Anspruch 3, **dadurch gekennzeichnet, daß** wenigstens 20% der Spulen (3) von Vergußmasse (13) bedeckt sind.

5. Elektromotor nach Anspruch 3 oder 4, **dadurch gekennzeichnet, daß** zumindest die nicht von Vergußmasse (13) umgebenen Bereiche der Spulen (3) imprägniert sind.

6. Elektromotor nach einem der vorhergehenden Ansprüche, **dadurch gekennzeichnet, daß** die elektrischen Zuleitungen (15) der Spulen (3) von Vergußmasse (13) umgeben sind.

7. Elektromotor nach einem der vorhergehenden Ansprüche, **dadurch gekennzeichnet, daß** das Kühlmedium Luft ist.

8. Elektromotor nach einem der vorhergehenden Ansprüche, **dadurch gekennzeichnet, daß** das Gehäuse (6) im Bereich des ersten Durchströmungsraumes (7) wenigstens einen Anschluß (10a) aufweist, durch den das Kühlmedium zugeführt werden kann.

9. Elektromotor nach Anspruch 8, **dadurch gekennzeichnet, daß** das Gehäuse (6) im Bereich des zweiten Durchströmungsraumes (8) wenigstens einen Anschluß (10b) aufweist, durch den das Kühlmedium abgeführt werden kann.

10. Elektromotor nach einem der vorhergehenden Ansprüche, **dadurch gekennzeichnet, daß** die Kanäle (9a) auf der dem Sekundärteil (14) abgewandten Seite der Spulen (3) liegen.

11. Elektromotor nach Anspruch 10, **dadurch gekennzeichnet, daß** das Gehäuse (6) in Richtung des Primärteils (14) durch die Vergußmasse (13) abgedichtet ist.

12. Elektromotor nach einem der Ansprüche 1-9, **dadurch gekennzeichnet, daß** die Kanäle (9a) auf der dem Sekundärteil (14) zugewandten Seite der Spulen (3) liegen.

13. Elektromotor nach einem der Ansprüche 1 - 9, **dadurch gekennzeichnet, daß** die Kanäle (9a) auf der dem Sekundärteil (14) zugewandten Seite und der dem Sekundärteil (14) abgewandten Seite der Spulen (3) liegen.

14. Elektromotor nach einem der vorhergehenden Ansprüche, **dadurch gekennzeichnet, daß** die Lücken (4) in der Nähe ihres geschlossenen Endes Vorsprünge (12) aufweisen, die als Anschlag für die Spulen (3) dienen.

15. Elektromotor nach einem der vorhergehenden Ansprüche, **dadurch gekennzeichnet, daß** der Elektromotor ein Linearmotor ist.

## Claims

1. An electric motor comprising a cooling system, consisting of a primary part (1) and a secondary part (14), the primary part (1) of which consists of an iron core (2) and coils (3), which are located in gaps (4) and which surround teeth (5) of the iron core (2), as well as of a housing (6), which accommodates the iron core (2), so that a first flow chamber (7) and a second flow chamber (9) is created for a cooling agent on both sides of the iron core (2), **characterized in that** the coils (3) are at least partially surrounded by sealing compound (13), so that the first flow chamber (7) and the second flow chamber (8) are in contact with one another by means of channels (9a) in the gaps (4).

2. The electric motor according to claim 1, **characterized in that** the coils (3) are completely covered by sealing compound (13).

3. The electric motor according to claim 1, **characterized in that** the coils (3) are only partially covered by sealing compound (13).

4. The electric motor according to claim 3, **characterized in that** at least 20% of the coils (3) are covered by sealing compound (13).

5. The electric motor according to claim 3 or 4,
**characterized in that** at least the areas of the coils (3), which are not surrounded by sealing compound (13), are impregnated.

6. The electric motor according to one of the preceding claims, **characterized in that** the electric supply lines (15) of the coils (3) are surrounded by sealing compound (13).

7. The electric motor according to one of the preceding claims, **characterized in that** the cooling medium is air.

8. The electric motor according to one of the preceding claims, **characterized in that**, in the area of the first flow chamber (7), the housing (6) encompasses at least one terminal (10a), through which the cooling agent can be supplied.

9. The electric motor according to claim 8, **characterized in that** the housing (6), in the area of the second flow chamber (8), encompasses at least one terminal (10b), through which the cooling agent can be discharged.

10. The electric motor according to one of the preceding claims, **characterized in that** the channels (9a) are located on the side of the coils (3) facing away from the secondary part (14).

11. The electric motor according to claim 10, **characterized in that** the housing (6) is sealed in the direction of the primary part (14) by means of the sealing compound (13).

12. The electric motor according to one of claims 1-9, **characterized in that** the channels (9a) are located on the side of the coils (3) facing the secondary part (14).

13. The electric motor according to one of claims 1-9, **characterized in that** the channels (9a) are located on the side of the coils (3) facing the secondary part (14) and on the side of the coils (3) facing away from the secondary part (14).

14. The electric motor according to one of the preceding claims, **characterized in that** the gaps (4), in the vicinity of its closed end, encompass projections (12), which serve as stop for the coils (3).

15. The electric motor according to one of the preceding claims, **characterized in that** the electric motor is a linear motor.

## Revendications

1. Moteur électrique avec refroidissement, constitué d'une pièce primaire (1) et d'une pièce secondaire (14), la pièce primaire (1) étant constituée d'un noyau de fer (2) et de bobines (3), qui se trouvent dans des espaces vides (4) et enserrent des dents (5) du noyau de fer (2), ainsi que d'un boîtier (6) recevant le noyau de fer (2), de manière à former une première chambre de passage (7) et une deuxième chambre de passage (8) des deux côtés du noyau de fer (2), pour un agent de refroidissement, **caractérisé en ce que** les bobines (3) sont au moins partiellement entourées d'une masse de remplissage (13), de sorte que la première chambre de passage (7) et la deuxième chambre de passage (8) sont reliées par des canaux (9a) dans les espaces vides (4).

2. Moteur électrique selon la revendication 1, **caractérisé en ce que** les bobines (3) sont entièrement recouvertes par la masse de remplissage (13).

3. Moteur électrique selon la revendication 1, **caractérisé en ce que** les bobines (3) ne sont recouvertes que partiellement par la masse de remplissage (13).

4. Moteur électrique selon la revendication 3, **caractérisé en ce qu'**au moins 20% des bobines (3) sont recouverts par la masse de remplissage (13).

5. Moteur électrique selon l'une des revendications 3 ou 4, **caractérisé en ce qu'**au moins les régions des bobines (3) non recouvertes par la masse de remplissage (13) sont imprégnées.

6. Moteur électrique selon l'une des revendications précédentes, **caractérisé en ce que** les lignes d'alimentation électriques (15) des bobines (3) sont entourées de la masse de remplissage (13).

7. Moteur électrique selon l'une des revendications précédentes, **caractérisé en ce que** l'agent de refroidissement est de l'air.

8. Moteur électrique selon l'une des revendications précédentes, **caractérisé en ce que** le boîtier (6) comporte au moins un raccord (10a) dans la région de la première chambre de passage (7), permettant d'alimenter l'agent de refroidissement.

9. Moteur électrique selon la revendication 8, **caractérisé en ce que** le boîtier (6) comporte au moins un raccord (10b) dans la région de la deuxième chambre de passage (8), permettant d'évacuer l'agent de refroidissement.

10. Moteur électrique selon l'une des revendications précédentes, **caractérisé en ce que** les canaux (9a) se trouvent du côté des bobines (3) qui est détourné de la pièce secondaire (14).

11. Moteur électrique selon la revendication 10, **caractérisé en ce que** le boîtier (6) est rendu étanche par la masse de remplissage (13) dans la direction de la pièce primaire (1).

12. Moteur électrique selon l'une des revendications 1 à 9, **caractérisé en ce que** les canaux (9a) se trouvent du côté des bobines (3) qui est tourné vers la pièce secondaire (14).

13. Moteur électrique selon l'une des revendications 1 à 9, **caractérisé en ce que** les canaux se trouvent à la fois du côté des bobines (3) qui est tourné vers la pièce secondaire (14) et du côté détourné de la pièce secondaire (14).

14. Moteur électrique selon l'une des revendications précédentes, **caractérisé en ce que** les espaces vides (4) comportent des saillies (12) à proximité de leur extrémité fermée, qui servent de butées pour les bobines (3).

15. Moteur électrique selon l'une des revendications précédentes, **caractérisé en ce que** le moteur électrique est un moteur linéaire.
